# EUROPEAN PATENT APPLICATION

(11) **EP 0 924 667 A2**
(43) Date of publication of application: **23.06.1999**
(21) Application number: 98119666.0
(22) Date of filing: 17.10.1998
(51) Int. Cl.: G07F 19/00, G07F 7/08

(54) **Distributed payment system for cash-free payment transfers using a purse chip card**

(30) Priority: 16.12.1997 DE 19755819
(71) Applicant: International Business Machines Corporation, Armonk, N.Y. 10504 (US)
(72) Inventor: Bublitz, Hermann, 03720 Benissa, Alicante (ES); Newth, Adam, Putney, Lonodn W 15, 2NJ (GB); Lee, Steve, Oakley, Basingstoke, Hauts RG23 (GB)
(74) Representative: Teufel, Fritz, Dipl.-Phys.

(57) **Abstract**

The invention presented describes a distributed payment system for cash-free payment with purse chip cards using the Net. The system consists of a client system which is, for example, installed at the customer site and a server system which is, for example, installed at the dealer. The client and server systems are connected over the Net, e.g. the Internet. The client system consists of a chip card reader, the software associated with this, a client transaction program and, preferably, a data processing system. The server system consists of a security module, a chip card reader device for the security module, a server transaction program and a client surrogate program which represents the client system and, preferably, a data processing system. The most important advantage of the distributed system is that a payment protocol, independent of any control centre, can be used economically for payment on the Net between the purchaser and dealer as well as for collective billing between the dealer and the purse settlement office. The use of standard components which are currently used in local payment terminals means that an economical design can be reached both in the dealer network nodes (server system) as well as in the purchaser network nodes (client system).

Payment using an electronic exchange has the advantage over existing cash-free payment systems in that there is no central control involved in the payment procedure, total settlement calculations are possible, a cryptographically secure protocol is used and anonymous payments are possible.

## Description

The invention refers to a payment system for cash-free payment transfers in a network by means of purse chip cards.

Modern types of cash-free payment transfers are carried out using chip cards. In particular, these are electronic purses, credit cards and debit cards.

Several different payment transfer applications can exist on a chip card, for example electronic purses and credit cards.

The chip card is initialized before issue to the customer, i.e. application data and cryptographic keys for securing the transaction are stored on the chip card which allow the chip card to be used within the framework of certain applications. On being issued with the card, the customer is informed of the application for which the chip card can be used.

If a customer wishes to pay for goods at a dealer using his/her purse chip card, then this transaction can be carried out at a payment terminal. The chip card is inserted into a chip card reader arranged in the payment terminal. Using the chip card reader, data can be read from the chip card or data can be written to the chip card. With electronic purse applications, the credit stored on the chip card is reduced by the amount which is to be paid to the shop for the goods.

To carry out the described payment procedure, the payment terminal has the following components in particular: a chip card reader, a keyboard for entering data, a display unit to display instructions to the customer, a security module, a communication connection to the network and software to control the corresponding transactions.

For local payment procedures at a dealer, all components of the payment terminal are integrated into one device.

The normal methods of payment today in the network are payments with credit cards, debit authorisations and electronic money. In paying using a credit card, the card number is given unsecured to the dealer; in payment by means of a debit authorisation, the account number is given unsecured to the dealer, and in payment using electronic money, a control centre which administers the money is intermediately switched.

Therefore the task of the invention presented is to produce a system and procedure which allows payment by means of a purse chip card over a data network where the same basic components of a local payment terminal as well as the same deduction and administration protocols are used between the dealer and the deduction office of the purse holder as in the local application.

This task is solved by the characteristics of claims 1 and 14. Further advantageous developments of this invention are presented in the sub-claims.

The fundamental advantage of the invention presented is that the payment protocol between the purchaser and the dealer, independent of a control centre, plus the calculation of the cumulative deductions between the dealer and the purse clearing office can be used cheaply for payment in the network.

By the use of standard components which are used in local payment terminals, a cheap design can be achieved both in the dealer's network nodes (server system) as well as in the purchaser's network nodes (client system).

Payments using an electronic purse differ from the usual methods of payment over the network in that
- no control centre is involved in the payment process
- cumulative deductions are possible
- a cryptographically secure protocol is used and
- anonymous payments are possible.

In a suitable design of the invention presented, the following components are installed at the purchaser/end user (client system):
1. A chip card reader for reading from and writing to the electronic purse chip card
2. Software for operating the chip card reader
3. Purchaser transaction software (client transaction program)
4. A keyboard for entering customer data, a display unit for displaying instructions to the customer and
5. A communication connection to the network.

If the purchaser/end user has a personal computer connected to the network, then only components 1, 2 and 3 are to be additionally installed. The keyboard, display unit and network communication exist as standard components.

The following components are installed at the dealer/network server (server system):
1. A security module
2. A chip card reader for reading and writing to the security module
3. The software for operating the security module
4. The communication connection to the network
5. A dealer transaction program (server transaction program) to control the transaction, for administration and deduction with the purse clearing office and
6. Purchaser surrogate software (client surrogate program) to read and write to the electronic purse card, amongst other things.

Components 1 to 5 are standard components of a local payment terminal i.e. a standard payment terminal for local operations. These components are equipped with the purchaser surrogate program (client surrogate program). The purchaser surrogate program is preferably installed at the dealer. The purchaser transaction software and the purchaser surrogate program are added to the standard components of a local payment terminal, in order to maintain a distributed payment terminal.

The task of the purchaser transaction software in the purchaser's network nodes is
- the transfer of the identification of the chip card to the dealer transaction software
- the transfer of the data packets from the dealer transaction program over the chip card reader to the purse chip card
- the transfer of the responses from the chip card to the dealer transaction program.

The task of the purchaser surrogate program in the dealer's network nodes is
- the creation of the purse chip card commands
- the transfer of the packets from the dealer transaction program to the purchaser transaction program and
- the transfer of responses from the purchaser transaction program to the general control of the dealer transaction program.

A payment transaction using a purse chip card is created using a cryptographically secure protocol between the purse chip card and the security module. The key for the cryptographic security is located at the terminal points of the protocol, the purse chip card and the security module. The protocol between the purse chip card and the security module takes place in the payment terminal in a local payment terminal.

The following procedure facilitates this protocol between the distributed components of the payment terminal:
- The purse chip card is identified locally in the network nodes of the purchaser/end user (client system) through the purchaser transaction program, after it is inserted into the chip card reader
- The payment procedure is initiated by the network nodes of the dealer/network server (server system) by a message to the network nodes of the purchaser. The purchaser transaction program sends the identification data of the purse card to the dealer transaction program
- The dealer transaction program and the purchaser surrogate program introduce the secured protocol between the purse chip card and the security module. The chip card command header data for the purse chip card is created in the purchaser surrogate program
- The data packets of the cryptographically secure protocol between the security module and the purse chip card are exchanged between the purchaser transaction program and the purchaser surrogate program over the network and interpreted by the dealer transaction program
- At the end of the cryptographically secure protocol between the security module and the purse chip card, the cumulative data is supplemented by the dealer transaction program in the security module and the transaction data for the later deduction is stored in the dealer's network nodes.

A suitable continuation of the invention is provided for in that the purchaser transaction program and the software to operate the chip card reader in the purchaser's network nodes is loaded in the purchaser's network nodes before the start of the payment transaction from the dealer's network nodes. This can preferably be carried out by implementing the software in JAVA.

Another continuation of the invention is provided for in the purchaser transaction program being designed to take precautions for deductions from the purse chip card in "time cycle operation". This time cycle operation, which is supported by some of the electronic purse chip cards, allows the deduction of a fixed amount from the purse chip card per fixed time unit. Thus it is possible, for example, to deduct the costs of suppliers who wish to deduct the costs of services per time unit.

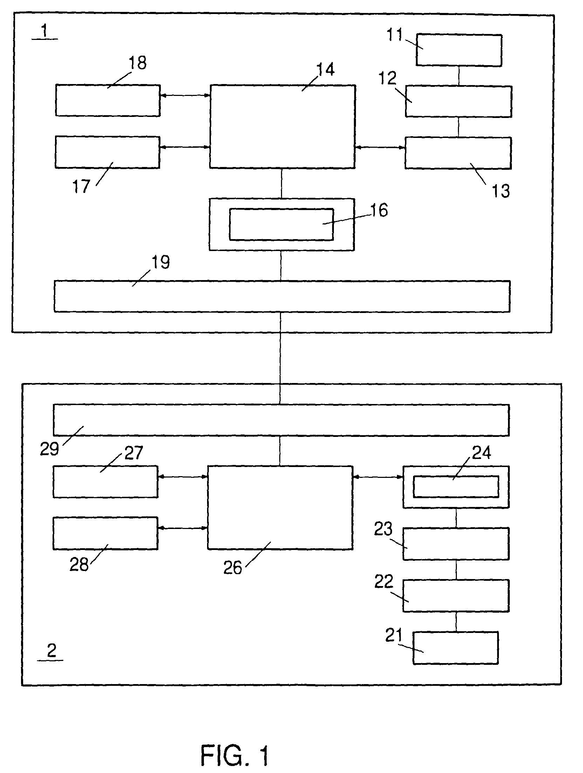

The invention presented is described in greater detail in the following using a drawing where Fig. 1 shows a schematic representation of a distributed payment terminal consisting of a client system and a server system according to the invention presented.

Fig. 1 shows a distributed payment terminal with components in the network node of the dealer 1 (server system) and in the network node of the purchaser 2 (client system).

In the network node of the purchaser 2 there is a display unit 27 and a keyboard 28. Information is shown using the display unit 27. This includes in particular the request to make certain payment-specific entries using the keyboard 28. The display unit 27 and the keyboard are controlled using standard terminal software 26, for example a PC operating system.

The distributed payment terminal can be used to give a dealer's customers the opportunity to pay without using cash within the framework of an electronic exchange, for the dealer's goods or services. For this reason the network node of the dealer 1 and the network node of the purchaser 2 are connected on-line using a central network over the host communication modules 19 and 29.

If a cash-free payment procedure is carried out using the distributed payment terminal, then in the network node of the purchaser 2, for example, the amount to be paid by the customer will be displayed on the display unit 27. By means of the keyboard 28 in the network node of the purchaser 2, the payment type can be selected and the amount to be paid can be confirmed.

To control the distributed payment terminal within the framework of use by the customer, in the network node of the dealer 1 the distributed payment terminal has a dealer transaction program 14 (server transaction program) and a purchaser surrogate program 16 (client surrogate program) which basically consists of a software module. The dealer transaction program 14 and the purchaser surrogate software 16 are stored in the memory of a processing unit in the network node of the dealer 1 and are used by a processor in the processing unit to carry out applications. The dealer transaction program 14 exchanges information with the different components of the distributed payment terminal, particularly with the security module 11 and the purchaser surrogate program 16 (client surrogate program).

The security module 11 is controlled by a card reader 12 and card reader software 13. The purchaser surrogate program 16 is used as a representative of the network node of the purchaser 2. It creates and interprets the command level of the purse chip card 21 and communicates with the network node of the purchaser 2 over the communication module 19.

In addition, in the network node of the dealer 1 there is a display unit 17 and a keyboard 18 for communicating with the dealer. These are used, for example, within the framework of the administration of the network node of the dealer 1 and for initializing the deduction with the purse clearing office.

If a customer wants to pay using his/her electronic purse which is on the chip card 21, then the customer inserts the chip card 21 into the card reader 22 and confirms the amount to be paid using the keyboard 28. The purchaser transaction program 24 carries out the procedural stages necessary for reading the identification data on the chip card using the card reader software 23. The card reader software 23 sets the card reader 22 into a state where the insertion of a chip card is expected. After the chip card 21 is inserted into the card reader 22 and correct contact is created between the chip card 21 and the card reader 22, the card reader 22 sends corresponding information to the purchaser transaction program 24 using the card reader program 22.

Then a payment transaction is to be carried out where the amount to be paid is deducted from the electronic purse on the chip card 21 and the deducted amount is stored in the network node of the dealer 1 along with other transaction data such as chip card identification, currency and purse owner, so that the dealer later receives this amount transferred from the clearing office of the purse owner.

In carrying out the procedural stages for deducting the amount to be paid from the chip card 21, the security module 11 is used for exchanging data relevant to security and to prevent misuse of the purse.

Stored in the security module 11 are functions and procedures to be carried out, and with whose help the deduction of the payment amount from the electronic purse of the chip card 21 can be completed, as well as cryptographic keys.

In addition, cumulative data on transactions started with the purse owner since the last deduction are held in the security module. Deductions are initiated by the dealer transaction program 14 and cover information exchange between the chip card 21 and the security module 11. This information exchange has the following step sequence:
- The chip card 21 is identified locally in the network node of the purchaser 2 by the purchaser transaction program 24 using the card reader software 23 after it is inserted into the card reader 22.
- The payment procedure is initiated by the network node of the dealer 1 by a message via the network communication modules 19 and 29 to the network nodes of the purchaser 2. This message contains, amongst other things, the amount.
- The amount and other relevant information are displayed on the display unit 27 in the network node of the purchaser 2 and confirmed and optionally supplemented by the purchaser through entries on the keyboard 28. The payment procedure in the network node of the purchaser 2 is thus initiated.
- The purchaser transaction program 24 sends the identification data of the chip card 21 to the purchaser surrogate program 16 in the network node of the dealer 1 over the network communication modules 29 and 9.
- The purchaser surrogate program 16 interprets the identification data and transfers it and the dealer transaction program 14.
- The dealer transaction program 14 initiates the secure protocol between the chip card 21 and the security module 11. The security module creates a cryptographically secure message to the purse chip card which is transferred over the card reader software to the dealer transaction program. The dealer transaction program transfers the message to the purchaser surrogate program.

The chip card command header data for the purse chip card is created by the purchaser surrogate program. The message is sent via the communication software to the purchaser transaction program. The purchaser transaction program transfers the complete message to the purse chip card over the card reader software. The cryptographically secure response of the purse chip card is transferred to the purchaser transaction program over the card reader program and it goes over the communication software to the purchaser surrogate program. The purchaser surrogate program interprets the protocol data of the response which refers to the chip card command and transfers the response to the dealer transaction program. The dealer transaction program interprets the response with regard to the protocol between the security module and the purse chip card. If the protocol is not complete, then the response is transferred to the security module and the previous steps are repeated. If the protocol is complete, then this means that the amount is deducted from the purse chip card and the cumulative data in the security module is supplemented, the dealer transaction program stores the transaction data for the later deduction in the network node of the dealer and ends the payment procedure.

At the end of the day or at a time determined by the dealer or the clearing office, the transaction data in the network node of the dealer is sent to the clearing office of the purse owner for deduction.

## Claims

1. Distributed payment system (1; 2) for cash-free payment transfers by means of a purse chip card containing
a) a client system (2)
containing
aa) a chip card reader device (12) for reading and writing to the electronic purse chip card
bb) a client transaction program (24) to control the communication of the client system components with the server system components
cc) an input device (27; 28)
dd) a communication device for connection to a data network (29)
b) a server system (1)
containing
aa) a security module (11)
bb) a chip card reader device for reading and writing to the security module (12)
cc) an input device (17; 18)
dd) a server transaction program (14) to control the communication of the server system components
ee) a client surrogate program (16) to represent the client system
ff) a communication device for connection to a network (19)
in which the communication device of the client system and the server system are connected with one another using a data line.

2. System according to claim 1, characterised by the client system (2) being installed at the customer site and the server system (1) being installed at the dealer.

3. System according to claims 1 or 2, characterised by the communication device of the client system (29) and the server system (19) being connected with one another over the Internet.

4. System according to claims 1 to 3, characterised by the client transaction program (24) executing the identification of the purse chip card to the server transaction program (14), the transfer of the request from the server transaction program via the chip card reader to the purse chip card and the transfer of the responses from the chip card to the server transaction program.

5. System according to claims 1 to 4, characterised by the client surrogate program (16) executing the creation of the purse chip card commands, the transfer of the request from the server transaction program (14) to the client transaction program and the transfer of the responses from the client transaction program to the general control of the server transaction program.

6. System according to claims 1 to 4, characterized by the input device of the client system and the server system consisting of a display device and a keyboard.

7. System according to claims 1 to 5, characterised by the communication device (19; 29), keyboard (18; 28) and display device (17; 27) being part of a data processing device or network computer.

8. A system according to claims 1 to 6, characterized by the server transaction program (14) and the client surrogate program (16) being installed in a data processing device or network computer of the server system.

9. System according to claims 1 to 8, characterized by the client transaction program and the program for controlling the chip card reader being stored in the server system or a server and not being loaded into the client system until the initiation of a payment process.

10. System according to claims 1 to 9, characterized by the client transaction program and the program for controlling the chip card reader being written in the JAVA programming language.

11. System according to claims 1 to 10, characterized by the client transaction program having planned precautions for debiting from the purse chip card in time-cycle mode.

12. System according to claims 1 to 11, characterized by the chip card reader device containing a program for controlling the chip card reader in reading and writing to the purse chip card.

13. A system according to claims 1 to 12, characterized by the chip card reader device containing a program for controlling the security module for reading and writing to the security module.

14. A procedure for cash-free payment using a purse chip card with a system according to claims 1, 2, 3, 6 to 13, containing the following steps:
a) Insertion of the purse chip card (21) in the chip card reader (22)
b) Identification of the purse chip card using the client transaction program (24)
c) Initiation of a payment procedure using the server system (1) or client system (2) by displaying the amount on the display device of the client system
d) Confirmation of the amount by the client system (2)
e) Transfer of the identification data of the purse chip card to the client surrogate program (16)
f) Interpretation of the identification data by the client surrogate program and transfer to the server transaction program (14)
g) Initiation of the secure protocol between the purse chip card (21) and the security module (11) using the server transaction program
h) Creation of a cryptographically secure message by the security module (11) and transfer of this message to the client surrogate program (16)
i) Creation of chip card commands for the purse chip card (21) by the client surrogate program (16) and transfer of the chip card command (23) to the purse chip card (11)
j) Creation of a response by the purse chip card and the transfer of this response to the server transaction program
k) Interpretation of the response according to step j) with regard to the protocol between the security module and the purse chip card by the server transaction program
l) if the protocol is not complete, repeat from step h) to k)
or
m) if the protocol is complete, save the payment transaction data using the server transaction program.

15. Procedure according to claim 14, characterized by the response according to step j) being transferred via the card reader program and client transaction program to the client surrogate program.

16. Procedure according to claim 15, characterised by the response according to step j) being interpreted by the client surrogate program into protocol data which refers to the chip card commands.

17. Procedure according to claims 11 to 16, characterized by the payment transaction data according to step m) being stored in the server system.
